(19) Europäisches Patentamt
European Patent Office
Office européen des brevets

(11) **EP 1 563 487 B1**

(12) **EUROPÄISCHE PATENTSCHRIFT**

(45) Veröffentlichungstag und Bekanntmachung des Hinweises auf die Patenterteilung:
**18.04.2007   Patentblatt 2007/16**

(21) Anmeldenummer: **03767421.5**

(22) Anmeldetag: **12.11.2003**

(51) Int Cl.:
*G10L 11/00* $^{(2006.01)}$   *G10L 17/00* $^{(2006.01)}$
*G10L 15/02* $^{(2006.01)}$

(86) Internationale Anmeldenummer:
**PCT/DE2003/003738**

(87) Internationale Veröffentlichungsnummer:
**WO 2004/049302 (10.06.2004 Gazette 2004/24)**

(54) **VERFAHREN ZUR ERMITTLUNG AKUSTISCHER MERKMALE VON SCHALLSIGNALEN FUER DIE ANALYSE UNBEKANNTER SCHALLSIGNALE UND MODIFIKATION EINER SCHALLERZEUGUNG**

METHOD FOR DETERMINING ACOUSTIC FEATURES OF ACOUSTIC SIGNALS FOR THE ANALYSIS OF UNKNOWN ACOUSTIC SIGNALS AND FOR MODIFYING SOUND GENERATION

PROCEDE POUR DETERMINER DES CARACTERISTIQUES ACOUSTIQUES DE SIGNAUX SONORES AFIN D'ANALYSER DES SIGNAUX SONORES INCONNUS ET DE MODIFIER UNE GENERATION SONORE

(84) Benannte Vertragsstaaten:
**AT BE BG CH CY CZ DE DK EE ES FI FR GB GR HU IE IT LI LU MC NL PT RO SE SI SK TR**

(30) Priorität: **22.11.2002   DE 10254612**

(43) Veröffentlichungstag der Anmeldung:
**17.08.2005   Patentblatt 2005/33**

(73) Patentinhaber: **Humboldt-Universität zu Berlin**
**D-10099 Berlin (DE)**

(72) Erfinder:
• **LANGNER, Jörg**
  **33098 Paderborn (DE)**

• **AUHAGEN, Wolfgang**
  **12207 Berlin (DE)**

(74) Vertreter: **Bittner, Thomas L.**
**Forrester & Boehmert**
**Pettenkoferstrasse 20-22**
**80336 München (DE)**

(56) Entgegenhaltungen:
**US-A- 5 583 961          US-B1- 6 389 392**

• **SIVAKUNTARAN P ET AL: "The use of sub-band cepstrum in speaker verification" PROCEEDINGS OF ICASSP 2000, Bd. 2, 5. Juni 2000 (2000-06-05), Seiten 1073-1076, XP010504912 ISTANBUL, TURKEY, 5-9 JUNI 2000**

EP 1 563 487 B1

**Beschreibung**

Die Erfindung betrifft ein Verfahren zur Ermittlung akustischer Merkmale von Schallsignalen, die das Vorliegen oder Nichtvorliegen einer Eigenschaft des Schallsignals oder des Schallerzeugers anzeigen, sowie die Verwendung des Ergebnisses dieser Merkmalsermittlung für die Analyse unbekannter Schallsignale auf Vorliegen oder Nichtvorliegen einer bestimmten relevanten Eigenschaft, oder für die Modifikation der Schallerzeugung in Bezug auf die Optimierung einer bestimmten relevanten Eigenschaft.

Die Erfindung bezieht sich auf das Gebiet der Schallanalyse im weitesten Sinne. Unter Schall verstehen wir hier musikalische Klänge, Sprachlaute und von Menschen, Tieren oder Gegenständen erzeugte Klänge oder Geräusche.

Wichtige Arbeitsfelder der Schallanalyse bilden im Stande der Technik die verschiedenen Systeme zur Sprachanalyse und Spracherkennung sowie Sprachsteuerung technischer Systeme einerseits als auch die verschiedenen Versuche musikalischer Klanganalyse, sowie andererseits die Maschinendiagnose.

Ein wichtiger Aspekt ist in der Regel die Sicherheit mit der ein Schallerzeuger identifiziert bzw. dem Klang oder Geräusch ein Merkmal zugeordnet werden kann. Dies gilt ganz besonders für solche Analyseverfahren, die eine Personenidentifizierung im Rahmen eines Sicherheitssystems durchführen sollen. Es wurden daher bereits die verschiedensten Merkmale und Kriterien - einzeln oder in Kombination - verwendet, um Schallsignale in Bezug auf den Schallerzeuger oder eine zu untersuchende Eigenschaft es Schallerzeugers charakterisieren zu können.

Aus Der US-PS 5 425 127 ist beispielsweise ein Verfahren zu Spracherkennung bekannt, das mit Breitband-Filtern und den Einhüllenden der Spektren zu den Sprachsignalen arbeitet.

Aus der DE 695 11 602 T2 ist ein Signalquellencharakterisiersystem bekannt, welches für die Steuerung von Autoradios, Freihandtelefonen, Handys und dergleichen eingesetzt werden soll, bei denen ein zu verstärkendes oder zu isolierendes Primärsignal von Fremdsignalquellen getrennt wird. Dieses System arbeitet vorrangig mit Signalfaltungen und Faltungsmischungen. Dabei wird Gebrauch davon gemacht, dass das Primärsignal sich aufaddiert während das Störsignal sich ausmittelt.

Aus der EP 0 297 729 A2 ist ein Verfahren zur Maschinen-Diagnose (bearing failure detection apparatus) auf akustischer Basis bekannt, das allein mit einem Schwellenwert in einem einzigen Frequenzbereich arbeitet. Das Gerät meldet lediglich ein bei einem defekten Lager auftretendes lautes Geräusch.

Aus der US 6 173 613 B1 ist ein spezielles Verfahren zur Maschinendiagnose bekannt, bei dem eine Relation zwischen hohen und tiefen Frequenzanteilen für eine Rissdetektion in Plattenmaterialien verwendet wird.

US 5,583,961 A offenbart ein Verfahren zur Sprechererkennung. In dem Verfahren werden als Reaktion auf ein Sprachsignal mehrere Merkmalsdaten erzeugt, welche eine Folge von Koeffizientenfolgen umfassen. Die Koeffizientenfolgen enthalten jeweils mehrere Koeffizienten, welche spezielle Kurzzeit-Amplituden in mehreren Frequenzbändern anzeigen.

Bezüglich der Analyse musikalischer Klänge lassen sich die Untersuchungen zur Klangfarbe in zwei große Richtungen einteilen: bei dem einen Forschungsansatz steht die Klangproduktion im Zentrum der Betrachtung, bei dem anderen die Klangrezeption, die Klangwirkung. Ein Schwerpunkt der Untersuchungen zur Klangproduktion ist es, klangliche Besonderheiten von Musikinstrumentengruppen, z.B. den Streichinstrumenten, in Abgrenzung zu anderen Gruppen herauszuarbeiten, dann aber auch eine Differenzierung innerhalb der einzelnen Instrumentengruppen vorzunehmen. Als wichtige klangunterscheidende Parameter wurden in solchen Untersuchungen herausgearbeitet:

-  die Periodizität bzw. Aperiodizität der Zeitfunktion des abgestrahlten Klanges,
-  die Hüllkurve des Betragspektrums,
-  Formanten, also klangprägende Gebiete relativ erhöhter Energie im Spektrum, deren Frequenzbereich von der wechselnden Grundfrequenz weitgehend unabhängig ist,
-  Geräuschanteile,
-  zeitabhängige Veränderungen des Klangspektrums im quasistationären Abschnitt,
-  Ein- und Ausschwingvorgänge.

Diese Parameter sind also für die Unterscheidbarkeit von Musikinstrumentengruppen wesentlich, wobei in der rezeptionsorientierten Klangforschung über den Beitrag, den jeder dieser Parameter zur Unterscheidbarkeit leistet, Uneinigkeit besteht. So ist beispielsweise im Bereich der Auswertung zeitlicher Information die Rolle von Ein- und Ausschwingvorgängen umstritten. Diese dürfte wohl am stärksten situationsabhängig sein. Bei isolierten Klängen und einzelnen Klangpaaren kommt den Transienten offensichtlich eine gewisse Bedeutung zu.[i] G. de Poli und P. Prandoni stellen die Hypothese auf, daß der Einschwingvorgang bei Instrumentalklängen das einzige Merkmal sei, daß vergleichsweise konstant bliebe und daher und daher für die Identifikation von zentraler Bedeutung sei, während das Klangspektrum die individuelle Qualität von Klängen bestimmen würde.[2] Andererseits zeigte ein Experiment von Mark Pitt und Robert Crowder, bei dem real erklingende Töne mit vorgestellten, also aus dem Gedächtnis abgerufen, Klängen verglichen werden sollten, daß der Einschwingvorgang keinen Einfluß auf das Ähnlichkeitsurteil hatte, sondern nur spektrale Un-

terschiede eine Rolle spielten.[3] Und auch die experimentellen Ergebnisse Christoph Reuters zur Wiedererkennbarkeit von manipulierten Instrumentenklängen[4] sprechen gegen eine zu hohe Gewichtung des Einschwingvorganges.

Als besonders schwierig hat es sich erwiesen, Qualitätsparameter eines Instrumentenklanges zu ermitteln.[5] Arbeiten auf diesem Gebiet, zum Beispiel Jürgen Meyers Untersuchungen an Gitarren[6] und an Klavieren[7] oder Heinrich Dünnwalds Untersuchungen an Violinen[8], zeigten, daß es keine isolierten physikalischen Parameter sind, die die Klangqualität prägen, sondern daß es sich stets um ein komplexes Zusammenwirken mehrerer Faktoren, z.B. der Ausgeprägtheit einzelner Resonanzen und den Pegelverhältnissen zwischen verschiedenen Frequenzbereichen des Spektrums, handelt. Das Problem bestand bisher nun darin, dieses komplexe Zusammenwirken mathematisch zu fassen und ein Verfahren zu entwickeln, daß für ganz unterschiedliche Klänge anwendbar ist, Generalisierungen - also z.B. Aussagen über Gemeinsamkeiten von Instrumentengruppen - zuläßt, aber auch die Erfassung individueller Klangbesonderheiten ermöglicht. Die bisherigen Verfahren versuchten, die Komplexität des Problems der klanglichen Qualitätsbestimmung dadurch in den Griff zu bekommen, daß aus der Vielzahl physikalischer Parameter der wichtigste bzw. eine sehr geringe Zahl besonders wichtiger Parameter ausgewählt wurden, also quasi eine Art Datenreduktion vorgenommen wurde. H. Dünnwald z.B. benutzte eine Schablone, die über die graphischen Resonanzkurven von Geigen gelegt wurden und anhand derer Pegelverhältnisse zwischen verschiedenen Frequenzbereichen ermittelt werden konnten. Dementsprechend waren die bisherigen Verfahren nur auf einzelne Musikinstrumente ausgerichtet und konnten auch den Einfluss des Spielers auf die Klangqualität nicht berücksichtigen. Untersuchungen zur Klanggestaltung durch Instrumentalisten oder Sänger sind - abgesehen von Jürgen Meyers prinzipiellen Überlegungen[9] - zudem bisher nur sehr selten durchgeführt worden, z.B. von Ekkehard Jost[10] und von Karel Krautgartner[11] an Klarinettisten und von Bram Gätjen an Oboisten,[12] so dass auf diesem Gebiet ein Mangel an empirischen Daten bestand, der das Austesten neuartiger Analyseverfahren, die große Datenmengen verarbeiten können, unmöglich machte.

Ausgehend hiervon liegt der Erfindung die Aufgabe zugrunde, gerade diejenigen akustischen Merkmale eines Schallsignals zu ermitteln, die in einem bestimmten Zusammenhang relevant sind und hiervon ausgehend Verfahren anzubieten, die die Detektion einer zu untersuchenden relevanten Eigenschaft ermöglichen.

Zur Lösung dieser Aufgabe ist bei einem Verfahren nach Anspruch 1 der eingangs genannten Art erfindungsgemäß vorgesehen, dass die separate Bearbeitung zweier Gruppen von Schallsignalen in wenigstens den folgenden Schritten erfolgt:

    1.) Erfassen der Schallsignale und Überführen in computerlesbare Audio-Dateien;
    2.) Erzeugen eines Frequenzspektrums jedes Schallsignals;
    3.) Erzeugung von Prädiktoren für jedes der Spektren beider Gruppen auf Basis

        a) der Tonhaftigkeit einzelner Frequenzen über Bestimmung des Klang-zu-Geräusch-Verhältnisses,
        b) der Summen der tonhaften Anteile und der Summen der Energieanteile jeweils in gewählten Frequenzbändern,

    4.) Erzeugung von abgeleiteten Prädiktoren durch Produktbildung und Relationenbildung aus den Prädiktoren;
    5.) Ermittlung der für die zu untersuchende Eigenschaft des Schallerzeugers relevanten akustischen Merkmale durch logistische Regression zwischen den beiden Gruppen mit wenigstens einzelnen der unter Schritten 3 und 4 erzeugten Prädiktoren und abgeleiteten Prädiktoren unter Gewinnung von Regressionskoeffizienten für einzelne Prädiktoren und abgeleitete Prädiktoren, die ein Maß für die Relevanz des jeweiligen Merkmals darstellen, wobei die beiden Gruppen jeweils wenigstens 2 Schallsignal-Beispiele enthalten und die erste der beiden Gruppen nur solche Beispiele enthält, die vorab gewonnen wurden und denen durch Messung oder Beurteilung das Vorliegen der zu untersuchenden Eigenschaft zugeordnet wurde, und die zweite Gruppe nur solche Beispiele enthält, die vorab gewonnen wurden und denen durch Messung oder Beurteilung das Nicht-Vorliegen der zu untersuchenden Eigenschaft zugeordnet wurde.

Unter "Prädiktoren" verstehen wir hier Werte-Folgen (Vektoren), die innerhalb des nachstehend detaillierter erläuterten, erfindungsgemäßen Verfahrens als Grundlage für die Zuerkennung von Klangeigenschaften ermittelt werden. Jeder dieser Vektoren repräsentiert ein bestimmtes akustisches Merkmal. Anhand eines Vergleichs vorher ausgewählter "Positiv- und Negativbeispiele" wird zunächst durch statistische Auswertung ermittelt, welche der insgesamt innerhalb des Verfahrens möglichen Prädiktoren für die betreffende untersuchte Eigenschaft spezifisch relevant sind. Mit Hilfe gerade dieser Prädiktoren werden in den verschiedenen Verwendungen unbekannte Schallsignale auf das Vorliegen oder Nicht-Vorliegen der Eigenschaft hin untersucht.

Gegenüber herkömmlichen nur im weitesten Sinne ähnlichen Verfahren zeichnet sich das erfindungsgemäße Verfahren aufgrund der Prädiktorenermittlung durch eine deutlich bessere Nutzung der Daten (Schallspektren) bzw. eine sehr starke Datenkompression aus. Durch die erfindungsgemäße Behandlung der Daten/Spektren wird die darin enthaltene Information bezüglich der Klangqualität optimal genutzt.

Beispielsweise wird in neueren Sprechererkennungsverfahren mit sehr großen Anzahlen von Einzelspektren gearbeitet (z. B. über ca. 4 Minuten alle 10ms ein Einzelspektrum, siehe Seite 263 und 264 im Paper von Julia, Heck & Cheyer 1997) und mit großen Anzahlen von akustischen Merkmalen (z. B. mit 2048 Gausschen Komponenten, Seite 264 in erwähntem Paper), wobei jedoch das einzelne Spektrum nicht sehr intensiv ausgewertet wird (lediglich 17 Mel-Cepstrum-Vektoren pro Spektrum). Das Technical Data Sheet zum Nuance Verifier™ 3.0 (Nuance Communications Inc., U.S.A.) spricht von dem einem Sprecher zugeordneten 'Voiceprint' von ca. 20 kB, dies entspricht einer Zahlenmatrix von mehreren hundert Werten und liefert damit ein Indiz für die große Anzahl der verwendeten Merkmale. Der dort betriebene hohe Datenerfassungs- und -bearbeitungsaufwand wird dabei nicht adäquat, oder zumindest nicht in einer der Erfindung entsprechenden Weise, ausgenutzt.

Das erfindungsgemäße Verfahren ermittelt genau diejenigen akustischen Merkmale eines Schallsignals, die in einem bestimmten, vorgegebenen Zusammenhang relevant sind und bei Verwendung des Verfahrens zur automatischen Detektion der zu untersuchenden Eigenschaft erforderlich sind.

Das Verfahren ermittelt insbesondere diejenigen akustischen Merkmale eines Klanges, die für bestimmte psychische Wirkungen dieses Klanges relevant sind, für bestimmte Klangeindrükke, wie "schön", "klar", "warm" und dergleichen charakteristisch sind, die zum Identifizieren einer Klangquelle - z.B. eines Sprechers - notwendig sind, oder die über Eigenschaften oder Befindlichkeiten der Klangquelle Auskunft geben. Die Möglichkeiten die das Verfahren eröffnet, reichen hier von der Untersuchung von Materialeigenschaften von Werkstoffen bis hin zu psychischen Befindlichkeiten von Sprechern.

Vorzugsweise erfolgt zwischen Schritt 2 und Schritt 3 des Verfahrens eine Bestimmung des Grundtons jedes Spektrums und bei Vorhandensein eines Grundtons (bei der Analyse von Klängen oder Signalen mit deutlichen klanghaften Anteilen) ein Transponieren des Spektrums auf einen Referenzton, so dass für jede der beiden Gruppen ein Satz nicht transponierter Spektren und ein Satz transponierter Spektren vorliegt, wobei die Schritte 3 bis 5 dann auf die nicht transponierten Spektren und die transponierten Spektren angewendet werden.

In Weiterbildung der Erfindung können die Ergebnisse aus Schritt 5 angezeigt und beispielsweise numerisch oder graphisch dargestellt werden. Andernfalls werden sie vor der Weiterverarbeitung gespeichert. Es bietet sich an, das erfindungsgemäße Verfahren in einem Kompaktgerät, inklusive Mikrophonen zur Aufnahme der Schallsignale, Datenverarbeitung, Software und integriertem Monitor, bzw. integrierter Anzeige anzubieten. Die Erfindung kann jedoch auch als Verfahren verwirklicht werden, dass auf vorhandenen Anlagen oder innerhalb größerer Geräte durchgeführt wird.

Die Erfindung wird im folgenden anhand von Ausführungsbeispielen näher erläutert, wobei die Darstellung insbesondere auf eine Abfolge einzelner Schritte Bezug nimmt.

Definitionen:

Unter der "Eigenschaft eines Schallsignals" wird diejenige Eigenschaft verstanden, die in einem bestimmten Zusammenhang, insbesondere für die Lösung eines Problems relevant ist. Eigenschaften in diesem Sinne sind z.B. dass ein musikalischer Klang von Hörern als "schön" empfunden wird; dass ein Sprachsignal von einem ganz bestimmten Sprecher stammt; oder dass ein Laufgeräusch von einer defekten Maschine stammt.

Unter den "akustischen Merkmalen eines Schallsignals" wird die Gesamtheit aller physikalischen Eigenschaften eines Schallsignals verstanden. Akustische Merkmale in diesem Sinne sind z.B. die aufsummierte Schallenergie innerhalb eines bestimmten Frequenzbandes; die Relation zwischen den aufsummierten Schallenergien verschiedener Frequenzbänder; oder der Rauschanteil innerhalb eines bestimmten Frequenzbandes.

"Schall" wird im allgemeinsten Sinne verstanden. Hierzu zählen also insbesondere musikalische Klänge, Sprachlaute, von Menschen, Tieren oder Gegenständen erzeugte Geräusche.

Die Grenzen des für Menschen hörbaren Frequenz-Bereichs müssen hierbei nicht notwendigerweise eingehalten werden. Auch ist das Verfahren nicht notwendigerweise auf Schall beschränkt, der sich in der Luft fortpflanzt.

Weitere Begriffs-Definitionen erfolgen bei der Beschreibung der einzelnen Schritte.

1. Schritt:

Ausgangspunkt für die Anwendung des Verfahrens ist stets eine konkrete Aufgabenstellung welche Eigenschaft eines Schallsignals oder Schallerzeugers untersucht werden soll. Vor Beginn des erfindungsgemäßen Verfahrens werden daher eine Reihe von Audio-Aufnahmen von Schallsignalen gewonnen und durch Bewertung oder Messung zwei Kategorien zugeordnet:

1) Pro-Beispiele, in denen die relevante Eigenschaft vorhanden ist (z. B. Beispiele für den "schönen" Ton eines Musikinstruments, für die Sprache eines zu identifizierenden Sprechers, für die Laufgeräusche einer defekten Maschine) - (erste Gruppe von Schallsignal-Beispielen);

2) Contra-Beispiele, in welchen die relevante Eigenschaft gerade nicht vorhanden ist (z. B. Beispiele für den nicht "schönen" Ton einer Klarinette, für die Sprache anderer Sprecher, für die Laufgeräusche einer einwandfrei funktionierenden Maschine) - (zweite Gruppe von Schallsignal-Beispielen).

Die Gesamtheit der Pro-Beispiele und Contra-Beispiele wird im folgenden unter der gemeinsamen Bezeichnung Beispiele oder Schall-Beispiele geführt. Alle Beispiele werden in den nachfolgenden Analyseschritten zunächst gleich behandelt, erst bei der logistischen Regression wird eine Unterscheidung bei der Behandlung der beiden Gruppen erforderlich.

Die Auswahl der Beispiele ist der Aufgabenstellung anzupassen. In der Regel sollten die Pro-Beispiele abgesehen von der einen relevanten Eigenschaft untereinander möglichst verschieden sein. (So sollten also z. B. die "schönen" Klarinetten-Töne auf verschiedenen Instrumenten und von verschiedenen Spielern gespielt sein. Die Sprachbeispiele sollten den zu identifizierenden Sprecher bei verschiedenen Wörtern zeigen.) Für die Auswahl der Contra-Beispiele gilt der gleiche Grundsatz der möglichst großen Verschiedenheit.

Die Gewinnung der Beispiele erfordert unter Umständen vorbereitende Maßnahmen, z. B. ein musikpsychologisches Experiment, in dem Hörer darüber befragt werden, welche Töne sie als "schön" empfinden. Bei der Maschinendiagnose müßte der tatsächlich vorliegende Zustand für eine Reihe von Maschinen durch nicht-akustische Prüfverfahren ermittelt werden.

Die Anzahl der notwendigen Beispiele hängt von der Aufgabenstellung, insbesondere der Schwierigkeit der Aufgabe und von der gewünschten Zuverlässigkeit des Verfahrens ab. Grundsätzlich sind wenigstens jeweils 2 Beispiele, vorzugsweise jedoch mindestens 10, besser wenigstens 50 Beispiele zu verwenden.

Die Beispiele werden in einer zeitlichen Länge von 300 bis 1000 ms, insbesondere 400 bis 500 ms benötigt. Sind die vorhandenen Aufnahmen der Schallsignale länger, so können kürzere Teile herausgeschnitten werden.

Die Tonaufnahmen der ausgewählten Beispiele können in beliebiger Form vorliegen (z. B. auf Audio-Cassette oder Audio-CD). Sie werden dann ggf. digitalisiert und in computerlesbare Form gebracht (z.B. in Dateien im WAV-Format).

Diese Umwandlung ist als solche gängige Technik und wird z. B. von den meisten der handelsüblichen PC-Soundkarten geleistet.

Als Ergebnis des 1. Schrittes existiert zu jedem der für die vorliegende Aufgabenstellung ausgewählten Pro- und Contra-Beispiele eine computerlesbare Audio-Datei.

Alle Vorgänge des 1. Schrittes sind gängige Verfahren aus dem Stand der Technik, so dass der Fachmann ohne weiteres in der Lage ist, die zu untersuchenden Schallsignale soweit aufzubereiten. Auch die Separierung in Pro- und Contra-Beispiele ist als solches eine gängige Prozedur.( siehe z. B. DE 19630109).

2. Schritt:

Die computerlesbaren Audio-Dateien werden nun als Input für ein Spektral-Analyse-Verfahren verwendet. Eine solche Spektralanalyse wird auch von zahlreichen herkömmlichen Audio-Analyseverfahren - zumeist per FFT, also der Fast-Fourier-Transformation- geleistet (z. B. "Viper"® der Firma Cortex Instruments). Man erhält also zu jedem der Schall-Beispiele ein Spektrum, praktisch realisiert als eine Zahlen-Folge $S_k$ (und k = 0 ... kx), wobei jedes $S_k$, ein Maß für die Stärke/Energie angibt, mit der eine Sinus-Schwingung der Frequenz $F_k$ im Schallsignal des betreffenden Beispiels vertreten ist. Die Frequenzen $F_k$ hängen von der gewählten Auflösung $\Delta f$ ab. Es gilt:

$$F_k = \Delta f \cdot k$$

Auflösung, Maximalfrequenzen und Frequenzband-Breite sind variabel und den Erfordernissen des Falles anzupassen.

Grundsätzlich sind diese Werte - Auflösung, Maximalfrequenzen, Wertepaarzahl und Frequenzband-Breite - variabel und den jeweiligen Erfordernissen anzupassen. Bei allen Aufgaben, welche die Untersuchung von subjektiv von Hörern empfundenen Eigenschaften betreffen, sind die Leistungs-Obergrenzen der menschlichen Wahrnehmung zu berücksichtigen (z. B. sollte bezüglich der Maximalfrequenz der Wert von 20000 Hz nicht sehr weit überschritten werden.). Bei Aufgabenstellungen, bei welchen es um die Merkmalsdetektion objektiver Eigenschaften geht, können und müssen eventuell diese Grenzen überschritten werden, sowohl was die Frequenzauflösung $\Delta f$ als auch was die obere Grenzfrequenz $F_{kx}$ betrifft.

Die Frequenzspektren werden vorzugsweise auf ein gemeinsames Minimum und einen gemeinsamen Intensitäts-Durchschnittswert normiert.

In einem bevorzugten Ausführungsbeispiel wird jede der von dem Audio-Analyseprogramm für jedes Beispiel gelieferten

Zahlenfolgen $S_k$ in zwei Rechenvorgängen einer Normierung unterzogen:

a) Es wird separat für jedes Beispiel jedem der $S_k$ ein solcher konstanter Betrag addiert oder subtrahiert, daß das Minimum der so modifizierten $S_k$ null ergibt.

b) Es werden anschliessend alle Werte mit einem solchen konstanten Faktor multipliziert, daß der Durchschnittswert über alle Werte für alle Beispiele gleich ist.

Die nach dem zweiten Bearbeitungsvorgang vorliegende Zahlenfolge wird im folgenden mit dem Buchstaben A benannt.

Da für jedes der i Beispiele ein solches normiertes Spektrum mit k Werten existiert, erhält man also insgesamt eine Matrix

$$A_{i,k} \quad ( i = 1 \dots ix \ \text{und} \ k = 0 \dots kx \ )$$

Indiziert man die Zeilen mit i und die Spalten mit k, so entspricht jede Zeile dieser Matrix einem der insgesamt ix Spektren (die gemäß der vorstehenden Unterschritte a) und b) normiert wurden).

Alle Vorgänge des 2. Schrittes zu Spektralanalyse und Normierung sind dem Fachmann geläufige Verfahren, die er aufgrund seiner Fachkenntnisse auswählen, durchführen und auch erforderlichenfalls abwandeln kann.

3. Schritt:

Auf jedes dieser Spektren werden zunächst die folgenden beiden Prozeduren angewendet:

a) Für jede Frequenz $F_k$ ein Maß dafür berechnet, wie stark der zugehörige Amplitudenwert die Amplituden der Nachbarfrequenzen übertreffen. Man könnte dies auch als ein Maß für die "Tonhaftigkeit" der betreffenden Frequenz bezeichnen, da eine besonders stark herausstechende Frequenz vom menschlichen Ohr als tonhafter Anteil des Schalles wahrgenommen wird - im Gegensatz zu den übrigen, geräuschhaften Anteilen.
Zu jedem Index (Frequenzwert) k wird ein Wert $TON_k$ zwischen 0 und 1 ermittelt, der ein Maß für die Tonhaftigkeit der zugehörigen Sinuskomponente ist. Die Werte $TON_k$ sind vorzugsweise so normiert, daß sie minimal den Wert 0 (bedeutet: rein geräuschhafter Anteil), maximal den Wert 1 erreichen (bedeutet: eindeutig tonhafter Anteil, reine Sinusschwingungen).
b) Für den Fall, daß es sich bei dem zu untersuchenden Schall um Schall mit einem definierbaren Grundton handelt (wie bei fast allen Tönen musikalischer Instrumente und in den stimmhaften Anteilen von Sprache, aber auch bei vielen Maschinen-Laufgeräuschen) wird das Spektrum optional zusätzlich auf einen gewählten Referenzton $F_{ref}$ transponiert. Hierzu muß zunächst die Frequenz $F_{orig}$ des im Originalsignal vorhandenen Grundtones ermittelt werden. Hierzu kann auf existierende Software zurückgegriffen werden (z. B. "Viper" der Firma Cortex Instruments). Ist die Frequenz des Original-Grundtones ermittelt, so kann die folgende Größe berechnet werden:

$$a_{trans} = F_{ref} / F_{orig}$$

Alle Frequenzen $F_k$ des Original-Spektrums werden sodann mit dem Tranpositionsfaktor $a_{trans}{}^2$ multipliziert:

$$FT_k = a_{trans} \cdot F_k \qquad (k = 0 \dots kx)$$

Man erhält auf diese Weise ein zweites Spektrum mit denselben Amplituden $A_k$, jedoch gehören zu diesen Amplituden die Frequenzen $FT_k$.

Nunmehr sollen die Energieanteile innerhalb bestimmter Frequnzbänder aufsummiert werden. Hier sind zunächst diese Frequenzbänder zu definieren, und zwar bezüglich ihrer Breite, ihrer Anzahl und ihrer absoluten Lage.

Breite:

Für die Anwendungen auf Musik und Sprache kann vorteilhaft mit logarithmisch äquidistanten Bändern gearbeitet werden, d .h. die Frequenzmitten zweier aufeinanderfolgender Bänder (angegeben in Hz) haben stets dasselbe Verhältnis r zueinander. Teilt man eine Oktave (also einen Bereich mit dem Frequenzverhältnis von 2:1) in d logarithmisch äquidistante Bänder, so ergibt sich: $r = 2^{(1/d)}$. In einem bevorzugten Ausführungsbeispiel wurde mit d = 4 gearbeitet, in musikalischer Terminologie also mit "Kleinterzbändern".

Anzahl:

Es wird mit wenigstens 5, vorzugsweise wenigstens 15, weiter vorzugsweise wenigstens 20 Frequenzbändern pro Schallsignal gearbeitet.

Lage:

Die unterste Bandmitte für die transponierten Spektren ist so gelegt, daß auch ein Bereich unterhalb des Grundtones von 185 Hz erfaßt wird.

Das zu einer Mittenfrequenz gehörige Frequenzband erstreckt sich dann auf die Umgebung der Frequenzmitte mit jeweils einem Radius von einem halben Mittenabstand. Die präzise mathematische Formulierung findet sich in den nachfolgenden Gleichungen zur Bildung der Bändersummen.

Zu jedem der zu analysierenden Beispiele und zu jedem der beiden Spektren werden nun zu den definierten Bändern die Bändersummen gebildet, d. h. es werden die Energieanteile aufsummiert, die innerhalb eines Bandes liegen.

$$N_{i,m} = Sum[A_{i,k}\, , \{k \mid Ln[MN_m]\text{-}Ln[d] < Ln[F_k] \leq Ln[MN_m]\text{+}Ln[d]\}]\, / \, (\text{Anzahl der Summanden})$$

für (i = 1 ... ix und m = 1 ... mNx)

$$T_{i,m} = Sum[A_{i,k}\, , \{k \mid Ln[MT_m]\text{-}Ln[d] < Ln[FT_k] \leq Ln[MT_m]\text{+}Ln[d]\}]\, / \, (\text{Anzahl der Summanden})$$

für (i = 1 ... ix und m = 1 ... mTx)

$$N\_TON_{i,m} = Sum[TON_{i,k}\, , \{k \mid Ln[MN_m]\text{-}Ln[d] < Ln[F_k] \leq Ln[MN_m]\text{+}Ln[d]\}]\, / \, (\text{Anzahl der Summanden})$$

für (i = 1 ... ix und m = 1 ... mNx)

$$T\_TON_{i,m} = Sum[TON_{i,k}\, , \{k \mid Ln[MT_m]\text{-}Ln[d] < Ln[FT_k] \leq Ln[MT_m]\text{+}Ln[d]\}]\, / \, (\text{Anzahl der Summanden})$$

für (i = 1 ... ix und m = 1 ... mTx)

Man erhält also mit diesen vier Matritzen, im folgenden Basis-Matritzen genannt, zu jedem der Beispiele:

- die Bändersummen des nicht-transponierten Spektrums (N)
- die Bändersummen des transponierten Spektrums (T)
- die Bändersummen der tonhaften Anteile des nicht-transponierten Spektrums (N_TON)
- die Bändersummen der tonhaften Anteile des transponierten Spektrums (T_TON) (Der Begriff "Basis" wird hier nicht im mathematischen Sinne als "Basis eines Vektorraums" verwendet, sondern im Sinne von "Fundament", auf dem alle weiteren Berechnungen beruhen.)

Die Spaltenvektoren in diesen vier Basis-Matritzen werden im folgenden Basis-Prädiktoren genannt. Wegen der Herkunft aus den Basis-Matritzen gibt es vier Typen von Basis-Prädiktoren (N, T, N_TON, T_TON). Jeder dieser Typen bildet eine Prädiktoren-Gruppe.

Ein Basis-Prädiktor ist also zum Beispiel der Spaltenvektor, der aus den aufsummierten Energieanteilen im 3. Frequenzband des nicht-transponierten Spektrums besteht. Da dieses Aufsummieren für alle vorliegenden Schallbeispiele getrennt durchgeführt wird, besteht der Basis-Prädiktor folglich aus insgesamt ix Elementen, die in der Regel alle verschieden voneinander sind.

4. Schritt:

Aus diesen Basis-Prädiktoren werden nun auf zwei Arten neue, kombinierte Prädiktoren berechnet. Im folgenden wird ein bevorzugtes Ausführungsbeispiel für diese Operation beschrieben.

I) die Produkte aus Basis-Prädiktoren. Hierbei wird zeilenweise (d. h. für jedes der Beispiele) das Produkt gebildet, z. B. das Produkt aus der 3. und 4. Bändersumme des nicht-transponierten Spektrums:

$$\text{ProN03\_04}_i = N_{i,3} \cdot N_{i,4} \quad (i = 1 \dots ix)$$

Oder das Produkt aus den tonhaften Anteilen der 5. und 12. Bändersumme des transponierten Spektrums:

$$\text{ProT\_TON\_05\_12}_i = T\_TON_{i,5} \cdot T\_TON_{i,12} \quad (i = 1 \dots ix)$$

Bildet man beispielsweise innerhalb der N-Gruppe alle möglichen Zweier-Produkte, so erhält man eine neue Gruppe von Prädiktoren: die Gruppe aller N-Produkt-Prädiktoren, oder kurz: die Gruppe aller N-Produkte.

Diese Produkt-Bildung erfolgt für alle vier Typen von Basis-Prädiktoren, man erhält also die Gruppen aller

1. N-Produkte

2. T-Produkte

3. N_TON-Produkte

4. T_TON-Produkte

II) die Relationen zwischen Basis-Prädiktoren. Hierbei werden ganz analog zur Produktbildung z. B. die folgenden Relationen gebildet:

$$\text{RelN03\_04}_i = N_{i,3} / N_{i,4} \quad (i = 1 \dots ix)$$

Bildet man beispielsweise innerhalb der N-Gruppe alle möglichen Zweier-Relationen, so erhält man eine weitere Gruppe von Prädiktoren: die Gruppe aller N-Relationen-Prädiktoren, oder kurz: die Gruppe aller N-Relationen.

Diese Relationen-Bildung erfolgt für alle vier Typen von Basis-Prädiktoren, man gewinnt also die Gruppen aller

1. N-Relationen
2. T- Relationen
3. N_TON- Relationen
4. T_TON- Relationen

Man erhält in diesem Ausführungsbeispiel als Ergebnis des 4. Schrittes also weitere acht Gruppen von Prädiktoren:

- die vier Gruppen der Produkte
- die vier Gruppen der Relationen

Durch die Bereitstellung der vier Gruppen von Basis-Prädiktoren (Schritt 3) und der acht Gruppen von kombinierten Prädiktoren (Schritt 4) erreicht man eine sehr intensive Auswertung der in einem einzelnen Spektrum enthaltenen Informationen.

5. Schritt:

Nunmehr wird eine Datenanpassung per Logistischer Regression durchgeführt. Die Logistische Regression ist ein gängiges Berechnungsverfahren, das von zahlreichen StatistikProgrammen (z. B. von SPSS) angeboten wird. Eine mathematische Beschreibung findet sich z. B. bei Hosmer & Lemeshow (2000). Bei diesem Verfahren wird berechnet, inwieweit eine abhängige Variable aus einer Reihe von unabhängigen Variablen "erklärt", d. h. auf sie zurückgeführt werden kann.

Als abhängige Variable fungiert hierbei eine Zahlenfolge $V_i$ (i = 1 ... ix), in welcher kodiert wird, ob die zu untersuchende Eigenschaft in dem betreffenden Beispiel vorhanden oder nicht vorhanden ist. Für alle i = 1 ... ix wird gesetzt:

$V_i = 1$ , falls Eigenschaft vorhanden
$V_i = 0$ , falls Eigenschaft nicht vorhanden

An dieser Stelle kommt also die Unterscheidung von Beispielen und Gegenbeispielen wieder zum tragen.

Als unabhängige Variablen für die Logistische Regression können alle aus den Schritten 1 bis 4 gewonnen Prädiktoren verwendet werden. Die jeweilige Eignung zur Lösung des Problems, d. h. zur "Erklärung" der in Betracht stehenden Eigenschaft wird prädiktorgruppenweise durch einzelne Regressionsrechnungen untersucht.

Als Methode hierbei hat sich bislang die "Vorwärts"-Methode bewährt, verbunden mit einem Aufnahme-Kriterium von 0.1 und einem Ausschluß-Kriterium von 0.05 (Letzteres bedeutet, daß nur Prädiktoren in die Lösung aufgenommen werden, deren Beitrag auf dem 5%-Niveau statistisch signifikant sind). Infolge des Aufnahme- und Ausschluß-Kriteriums/ der Signifikanz-Bedingungen verringert sich die Zahl der tatsächlich für die Lösung herangezogenen Prädiktoren in der Regel drastisch (auf weniger als ein Drittel der dem Verfahrenen "angebotenen" Prädiktoren).

Der jeweilige "Erfolg" kann durch verschiedene, von den Statistikprogrammen gelieferte Anpassungsmaße quantifiziert werden. Gearbeitet wurde bislang vornehmlich mit der von SPSS angegebenen Größe "Nagelkerkes $r^2$", welche sich - mit 100 multipliziert - in gewissem Sinne als "Varianzaufklärung in %" interpretieren läßt.

Es stellen sich bei diesen Rechnungen diejenigen Prädiktor-Gruppen heraus, die besonders erfolgreich sind. Bei den bisherigen Aufgabenstellungen waren dies die Gruppe der N-Prädiktoren, die Gruppe der N-Produkte, die Gruppe der T-Produkte sowie die Gruppe der N_TON-Prädiktoren.

Die erfolgreichsten Prädiktorgruppen sind miteinander zu kombinieren (hierbei sind verschiedene Varianten zu testen) und auf diese Weise ist die optimale Lösung zu finden. Die optimale Lösung ist diejenige, welche die maximale Varianzaufkärung unter den vorhandenen Pro- und Contra-Beispiel-Daten bei einer Kreuzvalidierung erreicht, wobei ausschliesslich statistisch mindestens auf 5%-Niveau signifikante Prädiktoren verwendet werden.

Man sollte auch testen, ob aus den ausgewählten Prädiktorgruppen einzelne Prädiktoren entfernt werden können, ohne daß sich der Erfolg wesentlich (um mehr als 1% der Varianzaufklärung) verschlechtert. Dies führt in der Regel zu "sparsameren" Lösungen, die den aufwendigeren vorzuziehen sind.

Das zur Weiterverarbeitung bestimmte Ergebnis der Regression sind die ausgewählten Prädiktoren und die zugehörigen Regressions-Koeffizienten. Sind px Prädiktoren $P_p$ (p = 1 ... px) ausgewählt worden, so erhält man zu jedem dieser Prädiktoren einen Koeffizienten $\beta_p$ (p = 1 ... px). Hinzu kommt $\beta_0$ als Koeffizient für die Konstante. (Man beachte hierbei, daß ein Prädiktor als Spaltenvektor aufzufassen ist, alle ausgewählten Prädiktoren bilden also eigentlich eine Matrix $P_{i,p}$ (i = 1 ... ix und p = 1 ... px), was oben bei $P_p$ verkürzt dargestellt wird.)

Das Ergebnis des 5. Schrittes besteht in dem Ergebnis der Regressionsrechnung.

Ein Beispiel für ein Ergebnis einer solchen Regressionsrechnung ist in Beispiel A angegeben.

Von der Regressionsrechnung wird erfindungsgemäß grundsätzlich auf zweierlei Art Gebrauch gemacht:

A) Die Regressionskoeffizienten mit den zugehörigen Prädiktoren können verwendet werden zur Voraussage, ob ein neues, bislang nicht untersuchtes Schallsignal eine zu untersuchende, relevante Eigenschaft, die der ersten Gruppe von Schallsignal-Beispielen aus der Merkmalsermittlung als vorhanden zugeordnet und der zweiten Gruppe als nicht vorhanden zugeordnet wurde, besitzt oder nicht.

Dabei kann das Schallsignal ein Ton, ein Klang, ein Geräusch oder ein Körperschall, insbesondere eine Vibration sein, ein durch menschliche Sprache erzeugtes Signal, oder ein durch eine Maschine oder ein technisches Gerät erzeugtes Schallsignal.

Die zu untersuchende Eigenschaft kann insbesondere eine psychische Wirkung eines Tons, eines Klanges oder Geräusches sein, wie beispielsweise die Eigenschaft "schön", "warm", "angenehm", "heiter", usw.. Die Schallsignal-Beispiele der ersten Gruppe sind dabei solche, denen diese Eigenschaft durch Beurteilung zugeschrieben wird, während die Schallsignal-Beispiele der zweiten Gruppe solche sind, denen die jeweilige Eigenschaft gerade nicht zugeschrieben wird.

Die Schallsignal-Beispiele der ersten Gruppe sind in einem Ausführungsbeispiel der Erfindung solche eines bestimmten zu erkennenden Sprechers und die Schallsignal-Beispiele der zweiten Gruppe sind die wenigstens eines anderen Sprechers, wobei die zu untersuchende Eigenschaft die Identität des Sprechers ist.

Das erfindungsgemäße Verfahren kann weiterhin zur Konstruktion von Kontrollinstrumenten herangezogen werden, welche prüfen, ob und in welchem Maße die akustischen Merkmale bei den von bestimmten Schallerzeugern ausgehenden Schallsignale vorliegen oder nicht. Sehr geeignet ist das erfindungsgemäße Verfahren u.a. für die Maschinendiagnose. Die Arbeitsgeräusche einer einwandfrei funktionierenden Maschine können mit dem Klang einer gleichartigen, aktuell zu prüfenden Maschine verglichen und Abweichungen sofort festgestellt werden. Durch Aufzeichnung von Beispielen ("Negativ-Beispielen") für den Klang bei bestimmten Maschinenfehlem kann in der Regel sogar eine Zuordnung der Fehlerart erfolgen. Der Vorteil der Methode liegt u.a. in ihrer Schnelligkeit gegenüber anderen Prüfmethoden; sie ist daher auch für die Daueröberwachung von Maschinen geeignet. In entsprechender Weise lässt sich das erfindungsgemäße Verfahren in der Werkstoffprüfung verwenden. Auch hier können gewünschte Werkstoffeigenschaften mit einer Schallcharakteristik korreliert werden.Das Werkstück wird zu einer Schallaussendung angeregt, der so im Prüfverfahren erzeugte Schall wird auf die spezifisch relevanten akustischen Merkmale hin überprüft.

Schließlich kann das erfindungsgemäße Verfahren für die iterative Überprüfung bei der Erzeugung von Klängen mit einer bestimmten gewünschten Wirkung verwendet werden.

Die Verwendungen des erfindungsgemäßen Merkmals-Analyseverfahrens werden mit Hilfe der nachfolgenden Anwendungsbeispiele näher beschrieben und sind in den Ansprüche gekennzeichnet

Wie bereits ausgeführt, erfolgt die Verwendung des Ergebnisses der Merkmalsermittlung mit Hilfe des erfindungsgemäßen Verfahrens für die Analyse eines unbekannten Schallsignals in Bezug auf die Eigenschaft oder die Eigenschaften, die der ersten Gruppe von Schallsignalen aus der Merkmalsermittlung als vorhanden zugeordnet und der zweiten Gruppe als nicht vorhanden zugeordnet wurde.

Analyse unbekannter Schallsignale

Der Ausgangspunkt ist ein neues, bislang nicht untersuchtes Schallsignal. Für dieses Schallsignal soll durch das Verfahren ermittelt werden, ob eine bestimmte relevante Eigenschaft vorliegt oder nicht. Zum Beispiel soll herausgefunden werden, ob ein musikalischer Ton als "schön" empfunden werden wird, ein Sprachsignal von einem bestimmten Sprecher stammt oder ob ein Laufgeräusch von einer defekten Maschine stammt.

Hierzu muss das Schallsignal, genauer: ein 400-500ms langer Ausschnitt dieses Signals auf die gleiche Art untersucht werden, wie die Pro- und Contra-Beispiele. Es wird also gemäß der Schritte 1 bis 3 verfahren:

1) Die Tonaufnahme wird in ein computerlesbare Datei umgewandelt.
2) Von dieser Datei wird das (Ausgangs)-Spektrum berechnet.
3) Hieraus werden die beiden Spektren (nicht-transponiert und transponiert) gebildet. Anhand dieser beiden Spektren werden die Bändersummen berechnet. Man erhält also für das zu untersuchende Beispiel jeweils einen Wert für jeden der Basis-Prädiktoren. Daraus können sodann die Werte für jeden der zusammengesetzten Prädiktoren berechnet werden. (Anders formuliert: Man berechnet für jeden der Prädiktoren, die bislang je aus ix Werten bestanden einen (ix+1)-ten Wert.)

Als Ergebnis des 3. Schrittes waren px signifikante Prädiktoren ermittelt worden. Seien

$$\mathrm{PWert}_p \ (p = 1 \dots px)$$

die Werte des zu untersuchenden Beispiels für diese Prädiktoren.

Dann errechnet sich die Wahrscheinlichkeit W dafür, daß das neue Schallsignal die relevante Eigenschaft besitzt gemäß der zentralen Gleichung der Logistischen Regression und unter Verwendung der Hilfsgröße H aus[13]:

$$H = \mathrm{Exp}[\ \ \mathrm{Sum}[\ \ \beta_p \cdot \mathrm{PWert}_p \,, \{p \,|\, p = 0 \dots px\} \ \ ] \ \ ]$$

Es wird gesetzt: $\mathrm{PWert}_0 = 1$ .

$$W = H / ( 1 + H )$$

Ist diese Wahrscheinlichkeit größer als eine zu wählende Größe c(0<c<1), so wird vorausgesagt, daß die relevante Eigenschaft vorliegt. Die geeignete Wahl von c hängt von der konkreten Aufgabenstellung und der spezifischen Situation ab, im Regelfall wird c = 0.5 gesetzt. Ein höherer Wert für c setzt die Irrtumswahrscheinlichkeit herab, daß fälschlicherweise "Eigenschaft vorhanden" vorausgesagt wird, erhöht jedoch die Irrtumswahrscheinlichkeit dafür, daß fälschlicherweise "Eigenschaft nicht vorhanden" prognostiziert wird. Ein niedrigerer Wert für c als 0.5 erzeugt den umgekehrten Effekt.

Anwendung zur Erzeugung oder Modifizierung von Klängen:

Bei der Regression sind zur Voraussage einer bestimmten Schalleigenschaft die Prädiktoren $P_p$ (p = 1 ... px) als statistisch signifikant ermittelt worden, und es wurde Ihnen ein positiver oder negativer β-Koeffizient zugewiesen.

Da den einzelnen Prädiktoren konkrete Schallmerkmale zugeordnet sind (so gehört etwa der Prädiktor $N_3$ zu der aufsummierten Energie im 3. Frequenzband des nicht-transponierten Spektrums), lassen sich aus der Regression Schlußfolgerungen für das Erzeugen oder Modifizieren von Schall mit der betreffenden Schalleigenschaft ableiten: Der Schallerzeuger ist so einzurichten oder zu modifizieren, daß die zu einem mit positiven β-Koeffizienten versehenen Merkmale gestärkt, die mit einem negativen β-Koeffizienten versehenen Merkmale abgeschwächt werden.

*Beispiel A (Regressionsanalyse)*

SPSS-Ausdruck "Logistische Regression Fg1/Fg"

Die Aufgabenstellung bestand darin, diejenigen akustischen Merkmale zu ermitteln, mit denen der Fagottist Nr. 1 unter allen Fagott-Beispielen identifiziert werden kann. Zugrunde lagen dabei 88 Tonbeispiele dieses Fagottisten (Pro-Beispiele) und 129 andere Fagott-Beispiele (Contra-Beispiele).

In der Tabelle 1 wird u.a. die Größe "Nagelkerkes R-Quadrat" angegeben, diese ist, wie oben bereits erläutert, ein Maß für den Erfolg der Anpassung. Aus der Klassifizierungstabelle (Tabelle 2) ist zu ersehen, dass 78 von den 88 Fg1-Beispielen korrekt dem Fagottisten zugeordnet werden (88,6 %) und dass von den 129 Nicht-Fg1-Beispielen 122 korrekt als Nicht-Fg1 zugeordnet werden (94,6 %).

Tabelle 3 zeigt, dass insgesamt 12 Prädiktoren zuzüglich der Konstante für die Regression herangezogen wurden. Diese sind in Spalte 1 aufgeführt. Hierbei bedeutet:

TP_01.11: der Prädiktor, der aus dem Produkt der ersten und elften Bändersumme des transponierten Spektrums gewonnen wurde;
N_01: der Prädiktor, der aus der ersten Bändersumme des nicht-transponierten Spektrums besteht;
N_TON_05: der Prädiktor, der aus den tonhaften Anteilen der fünften Bändersumme des nicht-transponierten Spektrums besteht.

In Spalte 2 befinden sich die zugehörigen β-Koeffizienten.

Tabelle 1

| Schritt | -2 Log-Likeli hood | Cox & Snell R-Quadrat | Nagelkerkes R-Quadrat |
|---|---|---|---|
| 14 | 88,445 | ,610 | ,824 |

Tabelle 2 (Klassifizierungstabelle[a])

| Beobachtet | | | Vorhergesagt | | |
|---|---|---|---|---|---|
| | | | FG_1 | | Prozentsatz der Richtigen |
| | | | 0 | 1 | |
| Schritt 14 FG_1 | 0 | | 122 | 7 | 94,6 |
| | 1 | | 10 | 78 | 88,6 |

(fortgesetzt)

| Beobachtet | Vorhergesagt | | |
|---|---|---|---|
| | FG_1 | | Prozentsatz der Richtigen |
| | 0 | 1 | |
| Gesamtprozentsatz | | | 92,2 |

a. Der Trennwert lautet ,500

Tabelle 3 (Variablen in der Gleichung)

| | | Regressionskoeffizient B | Standardfehler | Wald | df | Sig. | Exp(B) |
|---|---|---|---|---|---|---|---|
| Schritt 14 | Tp_01.11 | ,887 | ,271 | 10,711 | 1 | ,001 | 2,427 |
| | Tp_02.03 | -1,732 | ,413 | 17,621 | 1 | ,000 | ,177 |
| | Tp_02.07 | ,560 | ,313 | 3,212 | 1 | ,073 | 1,751 |
| | Tp_05.14 | -2,091 | ,513 | 16,628 | 1 | ,000 | ,124 |
| | N_01 | ,125 | ,086 | 3,417 | 1 | ,065 | 1,133 |
| | N_07 | -,898 | ,182 | 24,352 | 1 | ,000 | ,407 |
| | N_10 | 1,449 | ,256 | 32,058 | 1 | ,000 | 4,258 |
| | N_12 | -1,119 | ,206 | 29,559 | 1 | ,000 | ,327 |
| | N_TON_05 | -18,127 | 6,137 | 8,723 | 1 | ,003 | ,000 |
| | N_TON_06 | -22,219 | 6,335 | 12,301 | 1 | ,000 | ,000 |
| | N_TON_07 | 17,849 | 7,989 | 4,992 | 1 | ,025 | 56465110 |
| | N_TON_09 | 64,054 | 12,819 | 24,967 | 1 | ,000 | 6,58E+27 |
| | Konstante | 16,084 | 5,664 | 8,064 | 1 | ,005 | 9663162,9 |

*Beispiele allgemein*

Anzahl der Beispiele:

Bei den bisherigen Anwendungen wurde gearbeitet mit:

ca. 60 Pro- und 130 Contra-Beispielen
bei der Identifizierung eines bestimmten musikalischen Ausdrucks
ca. 40 Pro- und 140 Contra-Beispielen
bei der Identifizierung eines bestimmten Musikers

Auflösung:

$$\Delta f = 2.69160 \text{ Hz}$$

$$kx = 8\,129$$

bei der Analyse musikalischer Töne.

Als Maximalfrequenz wurde in den bisherigen Anwendungen gewählt:

$$F_{kx} = 22\,046.90 \text{ Hz} \quad \text{bei der Analyse musikalischer Töne}$$

konstanter Normierungsfaktor: 60

(Für eine Sprachanalyse werden weitgehend dieselben Parameter-Einstellungen empfohlen, jedoch kann die Frequenzobergrenze $F_{kx}$ halbiert und damit auch der Wert kx auf 4065 verringert werden)

Berechnung der Tonhaftigkeit mit z.B. nachfolgend angegebenem Mathematica-Programm,; Ergebnis 0 < $TON_k$ < 1

$$F_{ref} = 185 \text{ Hz}$$

Frequenzbänder:

Breite:

logarithmisch äquidistante Frequenzbänder, d=4 (Kleinterzbänder)
Anzahl:
für die nicht-transponierten Spektren: mNx = 23
für die transponierten Spektren: mTx =18

Lage:

Als Frequenzmitten (in Hz) wurden bisher gewählt:

für die nicht-transponierten Spektren:

$$MN_m = 370 \cdot 2^{(1/4) \cdot (m-1)} \quad (m = 1 \dots mNx)$$

für die transponierten Spektren:

$$MT_m = 370 \cdot 2^{(1/4) \cdot (m-1)} \quad (m = 1 \dots mTx)$$

Mathematica Programm

*Mathematica-Programm zur Berechnung der Tonhaftigkeit einer bestimmten Frequenz in einem gegebenen Spektrum*

*Seien die F[[k]] die Frequenzen des Spektrums (k = 1 ... kx) mit einer Frequenzauflösung dF (Δf im Text) von 13.458/5 Hz.*

```
dF = 13.458/5.;
F = Table [dF * (k - 1), (k, kx}]
```

*Die Index-Grenzen des Bereichs, der für die Berechnung der Tonhaftigkeit einer jeden Frequenz F[[k]] herangezogen wird (diese seien kTonOber und kTon Unter genannt), berechnen sich für jedes k unter Zuhilfenahme der zuvor festzulegenden Größen IntervallFaktorTonInnen und IntervallFaktorTonInnen aus:*

```
IntervallFaktorTonInnen = 6/5; TonInnenLog = N[Log[IntervallFaktorTonInnen]];
IntervallFaktorTonAussen = 5/4; TonAussenLog = N[Log[IntervallFaktorTonAussen]];
GrenzenTon[k_] := Module [{Obergrenze, Untergrenze, kTonOber, kTonUnter},
    Obergrenze = F[[k]] * N[IntervallFaktorTonAussen];
    Untergrenze = F[[k]] / N[IntervallFaktorTonAussen];
    kTonUnter = Min[kx, Ceiling[Untergrenze/dF] + 1];
    kTonOber = Min[kx, Floor[Obergrenze/dF] +1];

    {kTonUnter, k, kTonOber}
    ];
```

```
kTonUnter = Table[ GrenzenTon[k][[1]], {k, kx}];
kTonOber = Table [ GrenzenTon[k] [[3]], {k, kx}];
kTonDiff = kTonOber - kTonUnter;
```

*Seien A[[k]] die den Frequenzen F[[k]](k = 1 ... kx) zugehörigen Amplituden. Wieviel "Vorherrschaft" einer Frequenz gegenüber der Umgebung besteht, berechnet sich unter Zuhilfenahme der Funktionen Gton[x] und NV[k] dann aus:*

```
GTon [x_] :=Which[
                 x < TonInnenLog, 1,
                 x < TonAussenLog, (TonAussenLog-x) / (TonAussenLog-TonInnenLog),
                 x = x, 0];


NV[k_] := If [
   kTonDiff[[k]] =0, 0.,
   Sum[GTon[Abs[Flog[[k]] - FLog[[kk]]]] * (A[[k]]-A[[kk]]),
      {kk, kTonUnter[[k]], kTonOber[[k]]}]
      /Sum[GTon[Abs[FLog[[k]] - FLog[[kk]]]], {kk, kTonUnter[[k]], kTonOber[[k]]}]
   ];

Ton = Table [If[k = 1, 0., NV[k]], {k, kx}];
```

*Jeder Wert Ton[[k]] (k=1 ... kx) gibt also an, wie stark eine Frequenz F[[k]] mit ihrer Amplitude A[[k]] ihre Nachbarschaft "überragt".*

Mathematica Programm

*Auf die Ton[[k]] wird nun eine sigmoide Funktion SigmoTon [x] angewendet, dadurch erhält man Werte zwischen 0 und 1.*

```
XNullSigmoTon =15; xEinsSigmoTon = 22; δSigmoTon = 0.25;

SigmoTon[x_] := Module[{xNull, xEins, δ, xHalb, A, B, r, c},
  xNull = xNullSigmoTon;
  xEins = xEinsSigmoTon;
  δ = δSigmoTon;
  xHalb = 0.5 * (xNull + xEins);
  A = Log[1/(1-δ)-1];
  B = Log[1/δ-1];
  r = xHalb * (B-A) / (xEins * B - xNull *A);
  c = -A/ (r * xEins - xHalb);
  1/ (1 + Exp[-c * (r * x - xHalb)])
  ];

TON = Table [SigmoTon[[k]]], {k, kx}];
```

*Diese Werte TON[[k]] (k = 1 ... 1α) bilden das Maß für die Tohhaftigkeit einer Frequenz F[[k]], so wie es im Verfahren verwendet wird.*
Die in der vorstehenden Beschreibung und den Ansprüchen offenbarten Merkmale der Erfindung können sowohl einzeln als auch in beliebiger Kombination für die Verwirklichung der Erfindung in ihren verschiedenen Ausführungsformen von Bedeutung sein.

Literatur

[1]Paul Iverson, *Auditory stream segregation by musical timbre: effects of static and dynamic acoustic attributes,* in: Journal of Experimental Psychology, Human Perception and Performance 21,4 (1995), S.751-763.
[2]Giovanni de Poli und Paolo Prandoni, *Sonological models for timbre characterization,* in: Journal of New Music Research 26 (1997), S. 170-197.

[3]Mark A. Pitt und Robert G. Crowder, *The role of spectral and dynamic cues in imagery for musical timbre,* in: Journal of Experimental Psychology, Human Perception and Performance 18,3 (1992), S. 728-738.

[4]Christoph Reuter, *Der Einschwingvorgang nichtper-kussiver Musikinstrumente* (= Europäische Hochschulschriften, Reihe XXXVI Bd. 148), Frankfurt/Main 1995; derselbe, *Die auditive Diskrimination von Orchesterinstrumenten* (= Europäische Hochschulschriften, Reihe XXXVI Bd. 162), Frankfurt/Main 1996.

[5]Siehe hierzu auch: Jürgen Meyer, *Die Problematik der Qualitätsbestimmung bei Musikinstrumenten,* in: Instrumentenbau - Musik International 31, 1977, S. 241-248

[6]Jürgen Meyer, *Akustik der Gitarre in Einzeldarstellungen,* Frankfurt/Main 1985.

[7]Jürgen Meyer und Werner Lottermoser, *Über die Mögliclakeiten einer klanglichen Beurteilung von Flügeln,* in: Acustica 11,1961, S. 291-297; Klaus Wogram und Jürgen Meyer, *Akustische Untersuchungen an Klavieren: 2. Qualitätsbestimmung durch Hörtests,* in: Das Musikinstrument 29, 1980, S. 1432-1441.

[8]Heinrich Dünnwald, *Die Klangqualität von Violinen unter besonderer Berücksichtigung der Herkunft der Instrumente,* in: Zum Streichinstrumentenbau des 18. Jahrhunderts. Bericht über das 11. Symposium zu Fragen des Musikinstrumentenbaus, Michaelstein, 9.-10. November 1990, Michaelstein 1994, S. 71-82.

[9] Jürgen Meyer, Physikalische Aspekte des Geigenspiels. Ein Beitrag zur modernen Spieltechnik und Klanggestaltung. Siegburg 1978; derselbe, Physikalische Aspekte des Querflötenspiels. Das Instrumentalspiel, hg. von Gregor Widholm und Michael Nagy, Wien, München 1989, S. 77-96.

[10]Ekkehard Jost, *Akustische und psychometrische Untersuchungen an Klarinettenklängen* (= Veröffentlichungen des Staatl. Instituts für Musikforschung PK, Bd. 1), Köln 1967.

[11]Karel Krautgartner, *Untersuchungen zur Ar tikulation bei Klarinetteninstrumenten im Jazz,* Diss. phil. maschr. Köln 1982.

[12]Bram Gätjen, *Qualitätsmerkmale von Oboenklängen,* in: Flöten, Oboen und Fagotte des 17. und 18. Jahrhunderts (= Bericht über den 1. Teil des 12. Symposiums zu Fragen des Musikinstrumentenbaus Michaelstein, 8./9. November 1991), Michaelstein 1994, S.77-85.

[13]Hosmer, D. W. & Lemeshow, S. (2000), Applied Logistic Regression, Second Edition. New York: John Wiley & Sons.

[14]Julia, L.E., Heck, L.P.,Cheyer, A.J. (1997), "A Speaker Identification Agent", Proceedings der AVBPA-Tagung 1997, Crans Montana, Schweiz, S. 261-266

**Patentansprüche**

1. Verfahren zur Ermittlung akustischer Merkmale von Schallsignalen, die das Vorliegen oder Nichtvorliegen einer Eigenschaft des Schallsignals oder Schallerzeugers anzeigen, wobei die separate Bearbeitung zweier Gruppen von Schallsignalen in wenigstens den folgenden Schritten erfolgt :

   1.) Erfassen der Schallsignale und Überführen in computerlesbare Audio-Dateien, oder Übernahme eines vorab aufgenommenen Schallsignals in Form einer Audiodatei;

   2.) Erzeugen eines Frequenzspektrums jedes Schallsignals;

   3.) Erzeugung von Werte-Folgen anhand der Spektren beider Gruppen auf Basis der Energieanteile in gewählten Frequenzbändern, wobei dies jeweils geschieht für

      a) die Gesamt-Spektren und/oder
      b) die tonhaften Anteile der Spektren,

   4.) Erzeugung von abgeleiteten Werte-Folgen durch Produktbildung und Relationenbildung aus den Werte-Folgen; und

   5.) Ermittlung der für die zu untersuchende Eigenschaft des Schallerzeugers relevanten akustischen Merkmale durch logistische Regression verbunden mit einem Aufnahme-Kriterium und einem Ausschluss-Kriterium zwischen den beiden Gruppen mit wenigstens einzelnen der unter Schritten 3.) und 4.) erzeugten Werte-Folgen und abgeleiteten Werte-Folgen unter Gewinnung von Regressionskoeffizienten für einzelne Werte-Folgen und abgeleitete Werte-Folgen, die ein Maß für die Relevanz des jeweiligen Merkmals darstellen, wobei die beiden Gruppen jeweils wenigstens zwei Schallsignal-Beispiele enthalten und die erste der beiden Gruppen nur solche Beispiele enthält, die vorab gewonnen wurden und denen durch Messung oder Beurteilung das Vorliegen der zu untersuchenden Eigenschaft zugeordnet wurde, und die zweite Gruppe nur solche Beispiele enthält, die vorab gewonnen wurden und denen durch Messung oder Beurteilung das Nicht-Vorliegen der zu untersuchenden Eigenschaft zugeordnet wurde.

**2.** Verfahren nach Anspruch 1, **dadurch gekennzeichnet, daß** zwischen Schritt 2.) und Schritt 3.) eine Bestimmung des Grundtons jedes Spektrums und bei Vorhandensein eines Grundtons ein Transponieren des Spektrums auf einen Referenzton erfolgt, so dass für jede der beiden Gruppen ein Satz nicht transponierter Spektren und ein Satz transponierter Spektren vorliegt, wobei die Schritte 3 bis 5 dann auf die nicht transponierten Spektren und die transponierten Spektren angewendet werden.

**3.** Verfahren nach Anspruch 1 oder 2, **dadurch gekennzeichnet, daß** die Ergebnisse aus Schritt 5 angezeigt und vorzugsweise numerisch oder graphisch dargestellt werden.

**4.** Verfahren nach einem der Ansprüche 1 bis 3, **dadurch gekennzeichnet, daß** die in Schritt 2 erzeugten Frequenzspektren als Folge der Signalstärke über der Frequenz $S_k(F_k)$ mit k Wertepaaren ausgedrückt werden.

**5.** Verfahren nach einem der Ansprüche 1 bis 4, **dadurch gekennzeichnet, daß** die in Schritt 2 erzeugten Frequenzspektren auf ein gemeinsames Minimum und einen gemeinsamen Durchschnittswert normiert werden.

**6.** Verfahren nach einem der Ansprüche 1 bis 5, **dadurch gekennzeichnet, daß** die Tonhaftigkeit der Signale der Einzelfrequenzen bestimmt wird, indem festgestellt wird, wie stark der zugehörige Amplitudenwert die Amplituden der Nachbarfrequenzen übertrifft.

**7.** Verfahren nach einem der Ansprüche 1 bis 6, **dadurch gekennzeichnet, daß** die Frequenzbänder logarithmisch äquidistant sind und bei Tonbeispielen vorzugsweise die Breite einer kleinen Terz besitzen.

**8.** Verfahren nach einem der Ansprüche 1 bis 7, **dadurch gekennzeichnet, daß** mit wenigstens 5, vorzugsweise wenigstens 15, weiter vorzugsweise wenigstens 20 Frequenzbändern pro Schallsignal gearbeitet wird.

**9.** Verfahren nach einem der Ansprüche 1 bis 8, **dadurch gekennzeichnet, daß** die Schallsignale eine Länge von ca. 300 bis 1000 ms besitzen oder auf diese Länge verkürzt werden.

**10.** Verwendung des Ergebnisses der Merkmalsermittlung mit Hilfe des Verfahrens nach einem der Ansprüche 1 bis 9 für die Analyse eines unbekannten Schallsignals in Bezug auf die Eigenschaft, die der ersten Gruppe von Schallsignalen aus der Merkmalsermittlung als vorhanden zugeordnet und der zweiten Gruppe als nicht vorhanden zugeordnet wurde.

**11.** Verwendung nach Anspruch 10, **dadurch gekennzeichnet, daß** das Schallsignal ein Ton, ein Klang, ein Geräusch oder ein Körperschall, insbesondere eine Vibration ist, ein durch menschliche Sprache erzeugtes Signal oder ein durch eine Maschine oder ein technisches Gerät erzeugtes Schallsignal.

**12.** Verwendung nach Anspruch 10 oder 11, **dadurch gekennzeichnet, daß** die zu untersuchende Eigenschaft eine psychische Wirkung eines Tons, eines Klanges oder eines Geräusches ist, insbesondere die Eigenschaft "schön", "warm", "angenehm", "heiter", und dass die Schallsignal-Beispiele der ersten Gruppe solche sind, denen diese Eigenschaft durch Beurteilung zugeschrieben wird, während die Schallsignal-Beispiele der zweiten Gruppe solche sind, denen die jeweilige Eigenschaft gerade nicht zugeschrieben wird.

**13.** Verwendung nach Anspruch 12, **dadurch gekennzeichnet, daß** die Schallsignal-Beispiele der ersten Gruppe solche eines bestimmten zu erkennenden Sprechers, Sängers oder Instruments und die Schallsignal-Beispiele der zweiten Gruppe die wenigstens eines anderen Sprechers sind, wobei die zu untersuchende Eigenschaft die Identität des Sprechers, des Sängers oder des Instrumentes ist.

**14.** Verwendung des Verfahrens nach einem der Ansprüche 1 bis 9 für die Konstruktion von Kontrollinstrumenten, welche prüfen, ob und in welchem Maße die akustischen Merkmale bei den von bestimmten Schallerzeugern ausgehenden Schallsignale vorliegen.

**15.** Verwendung des Verfahrens nach einem der Ansprüche 1 bis 9 für die iterative Überprüfung bei der Erzeugung von Klängen mit einer bestimmten gewünschten Wirkung.

**16.** Computerlesbarer Datenträger, auf welchem gespeichert eine Datenstruktur vorliegt, die durch ein Verfahren gemäß einem der Ansprüche 1 bis 9 generiert wurde.

17. Computerlesbarer Datenträger, auf welchem codiert ein Programm zur Durchführung aller Schritte eines Verfahrens nach einem der Ansprüche 1 bis 9 auf einem Computer vorliegt.

18. Vorrichtung angepasst zur Durchführung des Verfahrens nach einem der Ansprüche 1 bis 9, insbesondere in den Verwendungen nach einem der Ansprüche 10 bis 13, **gekennzeichnet durch**

- wenigstens ein Mikrophon zur Aufnahme der Schallsignale,
- wenigstens eine feste oder externe Speichereinheit, die ein Datenverarbeitungsprogramm zur Durchführung des Verfahrens auf einem Speichermedium gespeichert enthält,
- wenigstens eine Anzeigevorrichtung zur Anzeige des mit dem Verfahren ermittelten Ergebnisses.

**Claims**

1. A method of determining acoustic features of sound signals indicating the presence or absence of a property of the sound signal or the sound generator,
wherein the separately processing of two groups of sound signals is performed in at least the following steps:

(1) detecting the sound signals and converting them into computer readable audio data or taking over a previously recorded sound signal in the form of an audio file;
(2) generating a frequency spectrum of each sound signal;
(3) generating value-sequences based on the spectra of the two groups on the basis of the energy proportions in selected frequency bands, this being done each

(a) for the overall spectra and/or
(b) for the tonal portions of the spectra;

(4) generating derived value-sequences by forming products and relations from the value-sequences;
(5) determining the acoustic features, which are relevant for the sound generator property under examination, by logistic regression in conjunction with an entry criterion and an exclusion criterion between the two groups with at least individual ones of the value-sequences generated in steps (3) and (4) and derived value-sequences, while obtaining regression coefficients for individual value-sequences and derived value-sequences representing a measure of the relevance of the respective feature,
the two groups each containing at least two sound signal examples, the first of the two groups containing only those examples which were obtained previously and which were assigned, by measurement or judgment, the presence of the property to be examined, and the second group containing only those examples which were obtained previously and which were assigned, by measurement or judgment, the absence of the property to be examined.

2. The method according to claim 1, **characterized in that**, between steps (2) and (3), the fundamental tone of each spectrum is determined and, where a fundamental tone is present, the spectrum is transposed to a reference tone, whereby a set of non-transposed spectra and a set of transposed spectra will be given for each of the two groups, steps (3) to (5) then being applied to the non-transposed spectra and the transposed spectra.

3. The method according to claim 1 or 2, **characterized in that** the results of step (5) are indicated, preferably being displayed numerically or graphically.

4. The method according to any one of claims 1 to 3, **characterized in that** the frequency spectra generated in step (2) are expressed by k value pairs due to the signal intensity above the frequency $S_k(F_k)$.

5. The method according to any one of claims 1 to 4, **characterized in that** the frequency spectra generated in step (2) are standardized to a common minimum and a common mean value.

6. The method according to any one of claims 1 to 5, **characterized in that** the tonality of the signals of the individual frequencies is determined by finding out by how much the associated amplitude value exceeds the amplitudes of the neighboring frequencies.

7. The method according to any one of claims 1 to 6, **characterized in that** the frequency bands are logarithmically equidistant, in the case of sound examples, preferably, having the width of a minor third.

8. The method according to any one of claims 1 to 7, **characterized in that** at least 5, preferably at least 15, more preferably at least 20 frequency bands are used per sound signal.

9. The method according to any one of claims 1 to 8, **characterized in that** the sound signals have a length of approximately 300 to 1000 ms or are shortened to that length.

10. Use of the result of the determination of features by the method according to any one of claims 1 to 9 for analysing an unknown sound signal as to the property which was assigned, by the determination of features, as being present in the first group of sound signals and as being absent from the second group.

11. The use according to claim 10, **characterized in that** the sound signal is a tone, note, noise, or body sound, especially a vibration, a signal produced by human speech or a sound signal caused by a machine or technical device.

12. The use according to claim 10 or 11, **characterized in that** the property to be examined is a psychic effect of a tone, note, or noise, especially the property "nice", "warm", "pleasant", "cheerful", and that the sound signal examples of the first group are ones which are attributed this property by judgment, whereas the sound signal examples of the second group are ones which specifically are not attributed the respective property.

13. The use according to claim 12, **characterized in that** the sound signal examples of the first group are ones of a certain speaker, singer, or instrument to be recognized, while the sound signal examples of the second group are those of at least another speaker, the property to be examined being the identity of the speaker, singer, or instrument.

14. The use of the method according to any one of claims 1 to 9 for the construction of control instruments which check whether and to what extent the acoustic features are given in the sound signals emanating from certain sound generators.

15. The use of the method according to any one of claims 1 to 9 for iterative verification in the generation of sounds having a certain desired effect.

16. A computer readable data medium storing a data structure which was generated by a method according to any one of claims 1 to 9.

17. A computer readable data medium carrying a coded program for performing all the steps of a method according to any one of claims 1 to 9 on a computer.

18. An apparatus adapted for carrying out the method according to any one of claims 1 to 9, especially when used according to any one of claims 10 to 13, **characterized by**

- at least one microphone to record the sound signals,
- at least one fixed or external storage unit containing a data processing program for performing the method stored on a data medium,
- at least one display device to indicate the results obtained by the method.

**Revendications**

1. Procédé permettant de déterminer des caractéristiques acoustiques de signaux sonores, qui indiquent l'existence ou l'inexistence d'une propriété du signal sonore ou du générateur de son, dans lequel le traitement séparé de deux groupes de signaux sonores est réalisé en au moins le nombre d'étapes suivantes consistant à :

1.) enregistrer les signaux sonores et les convertir en fichiers audio lisibles par ordinateur, ou prendre un signal sonore préalablement enregistré sous la forme d'un fichier audio ;
2.) produire un spectre de fréquences pour chaque signal sonore ;
3.) produire des suites de valeurs à partir des spectres des deux groupes d'après les fractions énergétiques dans des bandes de fréquence choisies, ceci étant réalisé pour

**EP 1 563 487 B1**

a) les spectres entiers et/ou

b) les parties sonores des spectres,

4.) produire des suites de valeurs dérivées par formation de produits et formation de relations à partir des suites de valeurs ; et

5.) déterminer les caractéristiques acoustiques intéressantes pour la propriété à étudier du générateur de son par régression logistique associée à un critère d'acceptation et à un critère d'exclusion entre les deux groupes avec au moins certaines des suites de valeurs et suites de valeurs dérivées produites aux étapes 3.) et 4.) avec production de coefficients de régression pour certaines des suites de valeurs et des suites de valeurs dérivées qui constituent une mesure de l'intérêt de la caractéristique en question, dans lequel les deux groupes contiennent chacun au moins deux extraits de signaux sonores, et le premier des deux groupes ne contient que des extraits qui ont été obtenus au préalable et auxquels l'existence de la propriété à étudier a été attribuée par mesure ou évaluation, et le deuxième groupe ne contient que des extraits qui ont été obtenus au préalable et auxquels l'inexistence de la propriété à étudier a été attribuée par mesure ou évaluation.

2.  Procédé selon la revendication 1, **caractérisé en ce qu'**une détermination du son fondamental de chaque spectre et, lors de la présence d'un son fondamental, une transposition du spectre à un son de référence ont lieu entre l'étape 2.) et l'étape 3.), de sorte qu'il existe pour chacun des deux groupes un ensemble de spectres non transposés et un ensemble de spectres transposés, si bien que les étapes 3 à 5 sont alors appliquées aux spectres non transposés et aux spectres transposés.

3.  Procédé selon la revendication 1 ou 2, **caractérisé en ce que** les résultats obtenus à l'étape 5 sont affichés et sont de préférence représentés numériquement ou graphiquement.

4.  Procédé selon l'une quelconque des revendications 1 à 3, **caractérisé en ce que** les spectres de fréquence produits à l'étape 2 sont exprimés sous forme de suite de l'intensité du signal en fonction de la fréquence $S_k(F_k)$ avec k paires de valeurs.

5.  Procédé selon l'une quelconque des revendications 1 à 4, **caractérisé en ce que** les spectres de fréquence produits à l'étape 2 sont normalisés à un minimum commun et à une valeur moyenne.

6.  Procédé selon l'une quelconque des revendications 1 à 5, **caractérisé en ce que** la sonorité des signaux des fréquences individuelles est déterminée en établissant l'intensité de dépassement de la valeur d'amplitude correspondante par rapport aux amplitudes des fréquences voisines.

7.  Procédé selon l'une quelconque des revendications 1 à 6, **caractérisé en ce que** les bandes de fréquence sont équidistantes sur le plan logarithmique et possèdent de préférence, dans les extraits sonores, la largeur d'une tierce mineure.

8.  Procédé selon l'une quelconque des revendications 1 à 7, **caractérisé en ce que** l'on travaille avec au moins 5, de préférence au moins 15, de manière plus particulièrement préférée au moins 20 bandes de fréquence par signal sonore.

9.  Procédé selon l'une quelconque des revendications 1 à 8, **caractérisé en ce que** les signaux sonores possèdent une longueur d'environ 300 à 1 000 ms ou sont raccourcis à cette longueur.

10. Utilisation du résultat de la détermination des caractéristiques' réalisée à l'aide du procédé selon l'une quelconque des revendications 1 à 9 pour l'analyse d'un signal sonore inconnu par rapport à la propriété qui a été attribuée comme étant présente au premier groupe de signaux sonores d'après la détermination des caractéristiques et comme étant absente au deuxième groupe.

11. Utilisation selon la revendication 10, **caractérisée en ce que** le signal sonore est un ton, un son, un bruit ou un son solidien, en particulier une vibration, un signal produit par le langage humain ou un signal sonore produit par une machine ou un appareil technique.

12. Utilisation selon la revendication 10 ou 11, **caractérisée en ce que** la propriété à étudier est un effet psychique d'un ton, d'un son ou d'un bruit, en particulier la propriété "beau", "chaleureux", "agréable", "gai", et **en ce que** les extraits de signaux sonores du premier groupe sont ceux auxquels cette propriété est attribuée par évaluation, tandis que les extraits de signaux sonores du deuxième groupe sont ceux auxquels la propriété en question n'est pas attribuée.

13. Utilisation selon la revendication 12, **caractérisée en ce que** les extraits de signaux sonores du premier groupe sont ceux d'un locuteur, chanteur ou instrument déterminé à reconnaître et les extraits de signaux sonores du deuxième groupe sont ceux d'au moins un autre locuteur, la propriété à étudier étant l'identité du locuteur, du chanteur ou de l'instrument.

14. Utilisation du procédé selon l'une quelconque des revendications 1 à 9 pour la conception d'instruments de vérification qui vérifient si et dans quelle mesure les caractéristiques acoustiques sont présentes dans les signaux sonores émis par des générateurs de son déterminés.

15. Utilisation du procédé selon l'une quelconque des revendications 1 à 9 pour la vérification itérative lors de la production de sons ayant un effet souhaité déterminé.

16. Support de données lisible par ordinateur sur lequel se trouve, sous forme enregistrée, une structure de données qui a été produite par un procédé selon l'une quelconque des revendications 1 à 9.

17. Support de données lisible par ordinateur sur lequel se trouve, sous forme codée, un programme permettant de réaliser toutes les étapes d'un procédé selon l'une quelconque des revendications 1 à 9 sur un ordinateur.

18. Dispositif adapté pour réaliser le procédé selon l'une quelconque des revendications 1 à 9, en particulier dans les utilisations selon l'une quelconque des revendications 10 à 13, **caractérisé par**

- au moins un microphone pour enregistrer les signaux sonores,
- au moins une unité de mémoire morte ou externe qui contient, sous forme enregistrée sur un support d'enregistrement, un programme de traitement de données permettant de réaliser le procédé,
- au moins un dispositif d'affichage pour afficher les résultats obtenus grâce au procédé.